# EUROPEAN PATENT SPECIFICATION

(11) **EP 2 816 650 B1**
(45) Date of publication and mention of the grant of the patent: **02.01.2019**
(21) Application number: 13748686.6
(22) Date of filing: 13.02.2013
(51) Int. Cl.: H01M 10/04

(54) **BATTERY CLEANING APPARATUS AND METHOD**
BATTERIEREINIGUNGSVORRICHTUNG UND VERFAHREN
APPAREIL ET PROCÉDÉ DE NETTOYAGE DE BATTERIE

(30) Priority: 13.02.2012 JP 2012028487
(43) Date of publication of application: 24.12.2014
(73) Proprietor: Nissan Motor Co., Ltd., Yokohama-shi, Kanagawa 221-0023 (JP); Automotive Energy Supply Corporation, Zama-shi, Kanagawa 252-0012 (JP)
(72) Inventor: YASOOKA, Takeshi, Atsugi-shi Kanagawa 243-0123 (JP); KAMATA, Atsushi, Zama-shi Kanagawa 252-0012 (JP)
(74) Representative: Hoefer & Partner Patentanwälte mbB
(86) International application number: PCT/JP2013/053378
(87) International publication number: WO 2013/122094

(56) References cited:
- EP-A1- 2 320 508
- EP-A1- 2 537 599
- WO-A1-2011/099307
- CN-U- 201 565 660
- JP-A- 2002 151 156
- JP-A- 2005 247 565
- JP-A- 2005 334 684
- JP-A- 2009 300 741
- JP-A- 2010 287 545
- JP-A- 2012 024 658
- US-B2- 6 972 044

## Description

### Technological Field

The present invention relates to a battery cleaning device and a battery cleaning method.

### Background Technology

In recent years, battery cells have been used in various products. With battery cells, a battery element in which positive electrodes, separators, and negative electrodes are layered is disposed in an external packaging. The battery element is immersed in an electrolyte inside the external packaging, and power is generated by a chemical reaction.

In the process whereby such battery cells are manufactured, the electrolyte is infused into the external packaging with the battery element disposed inside the external packaging. The electrolyte progressively impregnates the interior of the battery element starting from the periphery. For this reason, air remains on the interior of the battery element in some cases.

In addition, after infusion of the electrolyte, some of the electrolyte becomes gas due to the chemical reaction and can accumulate inside the battery element in some cases.

Thus, a known method is to heighten electrolyte impregnation by roller-pressing the battery cell in order to press out the gas on the interior of the battery element (refer to patent document 1). Another system to improve cutting of batteries is known from patent document 2.

### Prior Art Documents

### Patent Documents

Patent Document 1: Japanese Laid-Open Patent Application No. 2002-151156
Patent Document 2: CN 201 565 660 U.
Patent document 3: JP 2005 334684 A
Patent document 4 WO 2011/099307
Patent documents 3 and 4 disclose cleaning devices containing adhesive rollers.

### Disclosure of the Invention

### Problems to Be Solved by the Invention

However, when transporting battery cells to the roller-pressing step, foulants can become affixed to the surface of the battery cell. If roller-pressing is carried out with foulants adhering to the surface of the battery cell, then there is the danger that the surface of the battery cell will be scratched by the foulants. In this case, the laminate film that covers the external packaging will peel, exposing the metallic parts and also potentially having an influence on battery performance.

With the foregoing in view, it is an object of the present invention to provide a battery cleaning device and battery cleaning method whereby foulants are removed from the surface of battery cells.

### Means Used to Solve the Above-Mentioned Problems

A battery cleaning device having a cleaning means whereby the flat surface of a battery cell having at least one flat surface that is to be roller-pressed is cleaned prior to roller-pressing. The subject-matter of the present invention is defined in the wording of independent apparatus claim 1 and process claim 7. Other embodiments are defined in the wordings of dependent apparatus claims 2-6 and respectively in these of dependent process claims 8 and 9.

### Effect of the Invention

The flat surface of a battery cell is to be cleaned prior to roller-pressing, so the battery cell will not be damaged by foulants adhering to the flat surface when the battery cell is pressed during roller-pressing.

### Brief Description of the Drawings

[FIG. 1] Oblique view showing the exterior of the battery cell.
[FIG. 2] Diagram showing a plan view and side view of the battery cell.
[FIG. 3] Exploded perspective view of the battery cell.
[FIG. 4] Schematic view showing the movement of the battery cell during the pressing step.
[FIG. 5] Side view showing the elements involved in cleaning of the battery cell by the battery cleaning device.
[FIG. 6] Schematic view of the battery cleaning device as seen from the direction of VI in FIG. 5.
[FIG. 7] Schematic view of the battery cleaning device as seen from the direction of VIII in FIG. 5.
[FIG. 8] Schematic view showing the movement of the battery cell in the pressing step.
[FIG. 9] Schematic view of the battery cleaning device from the direction of IX in FIG. 8.
[FIG. 10] Diagram showing the configuration for cleaning the surface of the battery cell 10 by blowing air.
[FIG. 11] Schematic view showing the battery cell.

### Preferred Embodiments of the Invention

Embodiments of the present invention are described below with reference to the accompanying drawings. In the descriptions of the drawings, the same symbols refer to the same elements, and duplicate descriptions are thus not made. The dimensional ratios in the drawings may be exaggerated in order to aid in description and thus may differ from the true ratios in some instances.

The present invention relates to a battery cleaning device for cleaning the flat surfaces of battery cells, as well as a battery cleaning method. The configuration of the battery that is to be cleaned will be described prior to describing the battery cleaning device and method.

### (Battery)

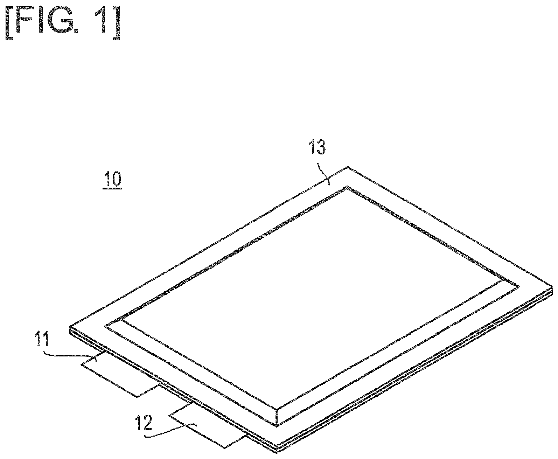

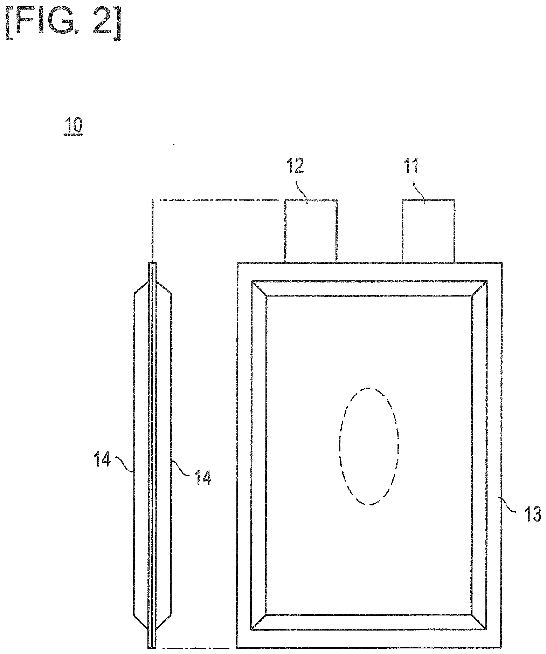

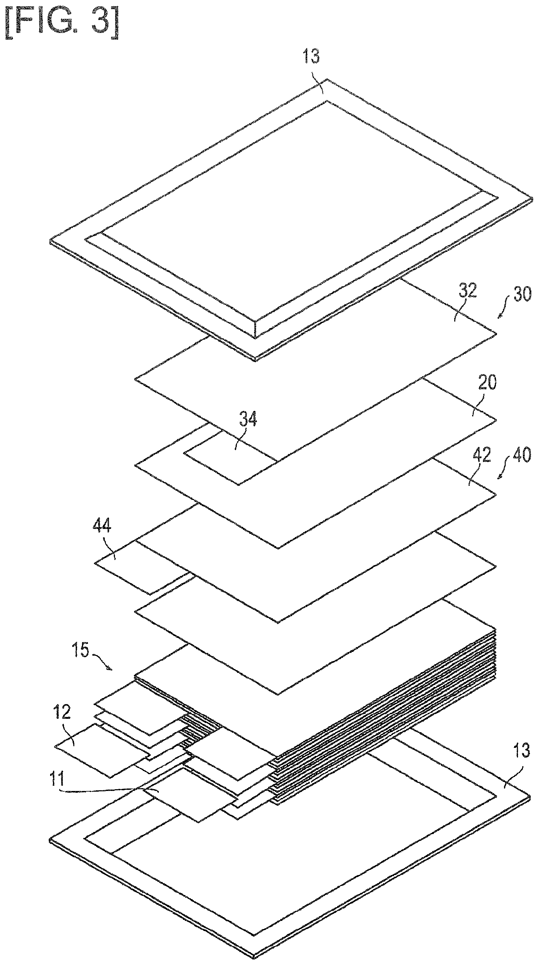

FIG. 1 is an oblique view showing the exterior of a battery cell. FIG. 2 is a diagram showing a plan view and side view of the battery cell. FIG. 3 is an exploded oblique view of the battery cell.

As shown in FIG. 1 and FIG. 2, the battery cell 10 has a flattened rectangular shape, with a positive electrode lead 11 and a negative lead 12 exiting from the same end of an external packaging 13. The external packaging 13, for example, is produced by applying a resin coating to the surface of an aluminum sheet.

As shown in FIG. 3, the interior of the external packaging 13 contains electrolyte and an electricity-generating element (battery element) 15 whereby the charging and discharging reactions occur. The electricity-generating element 15 is formed by alternately layering positive electrodes 30 and negative electrodes 40, with sheet-form separators 20 interposed therebetween. In some cases, air, gas, or the like remains in the battery element 15 (separator 20) after the electricity-generating element 15 has been disposed in the external packaging 13, or after the electrolyte has been added. For example, gas or air remains in the circular region indicated by the dotted line in FIG. 2.

With the positive electrodes 30, a positive active substance layer 32 is formed on both surfaces of a sheet-form positive electrode collector. The positive active substance layer 32 is not formed on the tab portions 34 of the positive electrodes 30. The respective tab portions 34 of the positive electrodes 30 are disposed at overlapping positions as seen from the layering direction in the electricity-generating element 15. The tab portions 34 connect with a positive electrode lead 11.

With the negative electrodes 40, a negative electrode active substance layer 42 is formed on both surfaces of a sheet-form negative electrode collector. The negative active substance layer 42 is not formed on the tab portions 44 of the negative electrodes 40. The respective tab portions 44 of the negative electrodes 40 are disposed at overlapping positions as seen from the direction of layering of the electricity-generating element 15 and are disposed so as not to overlap with the tab portions 34 of the positive electrodes 30. The tab portions 44 are connected to a negative electrode lead 12.

A flat surface 14 is formed on both sides of the flattened form of the battery cell 10. Because this flat surface 14 is pressed with a press-roller, the gas or air that has accumulated in the battery element 15 is pressed out from the battery element 15, so that electrolyte impregnates the interior of the battery element 15 in its place.

Prior to pressing of the battery cell 10 with the press-roller, the flat surface 14 of the battery cell 10 is cleaned by the battery cleaning device.

The battery cleaning device and method are described in detail below.

### (First Embodiment)

The battery cleaning device and battery cleaning method pertaining to a first embodiment are described below.

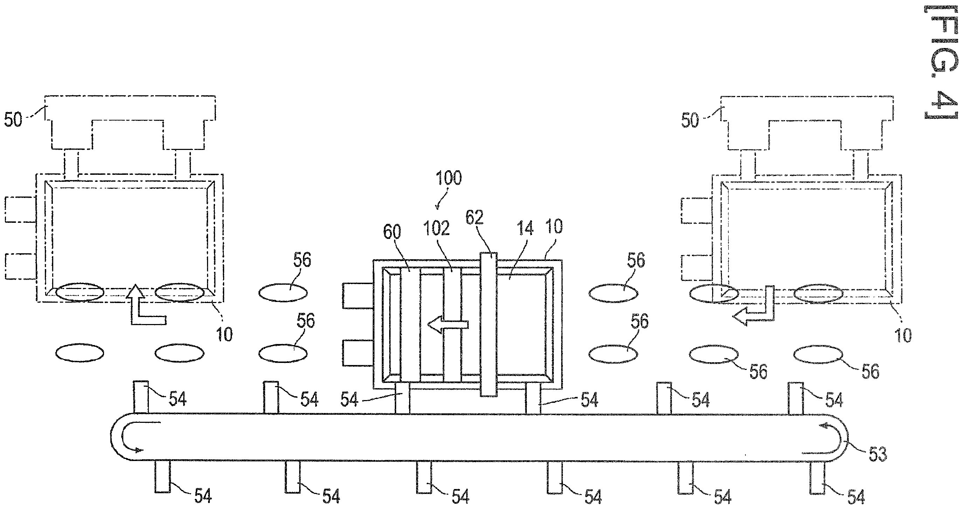

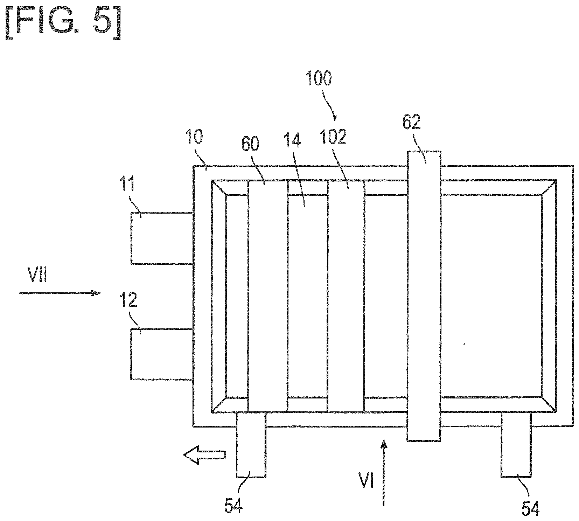

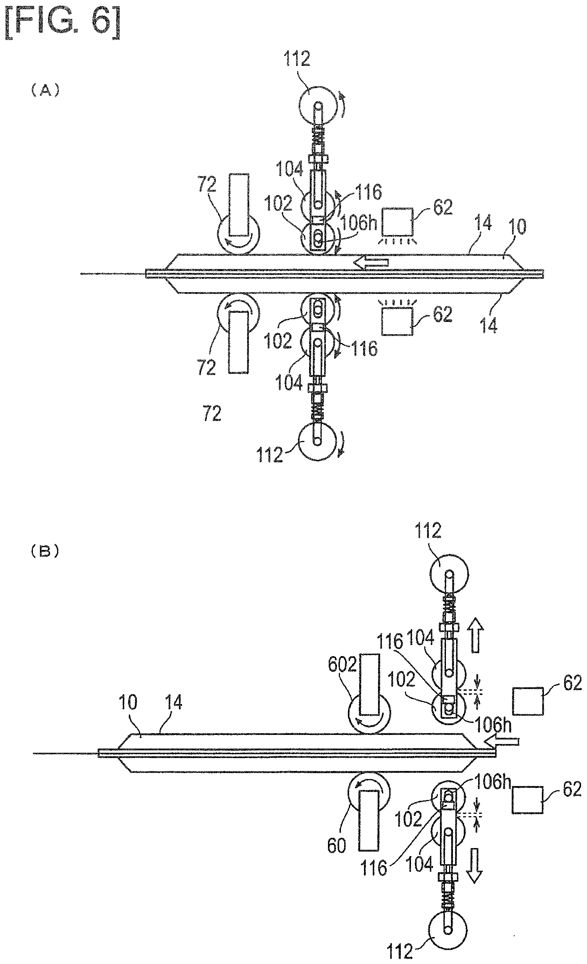

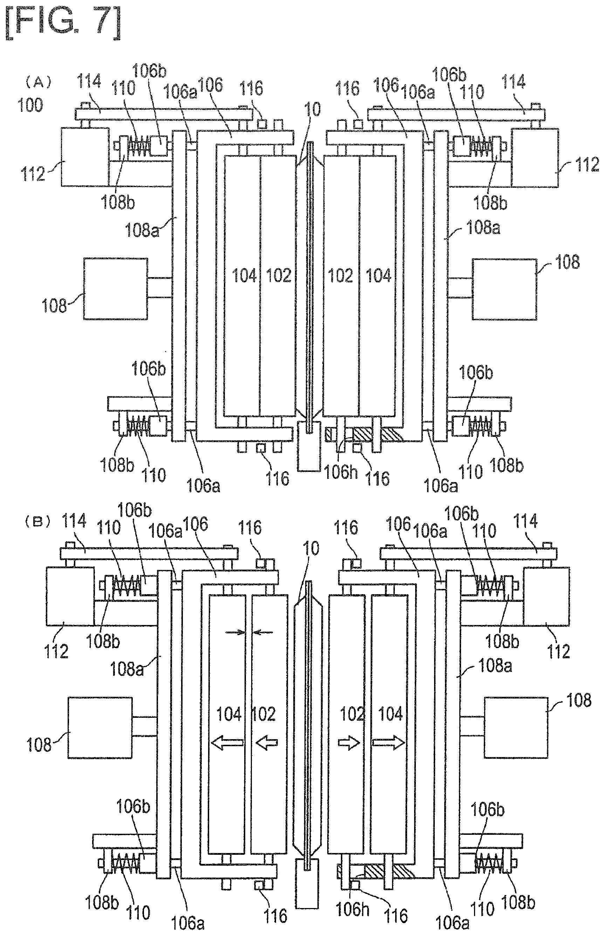

FIG. 4 is a schematic diagram showing the movement of the battery cell in the pressing step. FIG. 5 is a side view showing the elements involved in cleaning the battery cell by the battery cleaning device. FIG. 6 is a schematic view of the battery cleaning device as seen from the direction of VI in FIG. 5. FIG. 7 is a schematic view of the battery cleaning device as seen from the direction of VIII in FIG. 5. FIG. 4 and FIG. 5 show only the cleaning roller 102 of the battery cleaning device 100. In addition, FIG. 6(A) and FIG. 7(A) show the battery cleaning device during cleaning, and FIG. 6(B) and FIG. 7(B) show the battery cleaning device prior to cleaning.

The battery cleaning device 100 of this embodiment is suitable for use in a pressing step in which the battery cell 1 0 is pressed. The configuration of the pressing step will first be described.

In the pressing step in which the battery cell 10 is pressed, two transport devices 50, 52 are provided that transport the battery cell 10 with the short edge of the rectangular form standing vertically. One of the transport devices 50, as indicated by the dotted line in FIG. 4, transports the battery cell 10 through the air in a suspended state. The transport device 50, for example, is a transport robot that performs transport by grasping an outer edge (upper edge) of the external packaging 13 of the battery cell 10.

In addition, the transport device 52 has a belt 53 that is formed as a loop and rotates, with multiple transport receivers 54 provided on the belt 53. The transport receivers 54 move while sandwiching the bottom edge of the external packaging 13, thereby transporting the battery cells 10. At least two of the transport receivers 54 support the battery cell 10.

The battery cell 10 is moved to the pressing process by the transport device 50, transferred to the transport device 52, then picked up again and removed by the transport device 50 after completion of the pressing step. Multiple guide rollers 56 are provided in the pressing step in order to stabilize transport of the battery cell 10 during the pressing step or to stabilize transfer of the battery cell 1 0 between the transport devices 50, 52. The guide rollers 56 are provided on both sides of the battery cell 10 in the direction of transport and guide the flat surfaces 14 of the cell 10 so as to prevent the battery cell 10 from falling during its advancement through the pressing step.

Pressing rollers 60 are disposed in the pressing step. The pressing rollers 60, as shown in FIG. 5 and FIG. 6, sandwich the battery cell 10 from both sides, pressing the flat surface 14 along the layering direction of the battery element 15 on the inside. As a result, the gas in the battery element 15 is pressed out from the battery element 15, and electrolyte impregnates the interior of the battery element 15 in its place.

As shown in FIG. 5 and FIG. 6, a static electricity elimination device 62 is attached to the battery cleaning device 100 in the pressing step. The static electricity elimination device 62 blows ions that have been generated at high frequency on the flat surface 14 of the battery cell 10 and de-electrifies the battery cell 10. The static electricity elimination device 62 is situated downstream in the direction of advancement of the battery cell 10 relative to the cleaning roller 102 and the pressing rollers 60. The flat surface 14 of the battery cell 10 is de-electrified prior to cleaning and pressing.

As shown in FIGS. 5 to 7, the battery cleaning device 100 has cleaning rollers 102, transfer rollers 104, roller support parts 106, cylinders 108, springs 110, motors 112, belts 114, and fixing parts 116.

The cleaning roller 102 is an adhesive roller that has an adhesive supported on its surface, which rotates while in contact with the flat surface 14 of the battery cell 10, thereby cleaning the surface of the battery cell 10. The cleaning roller 102 is situated downstream from the pressing roller 60 in the direction of advancement of the battery cell 10, and the flat surface 14 of the battery cell 1 0 is cleaned in advance of rolling. In addition, the cleaning roller 102 is situated upstream from the static electricity elimination device 62 in the direction of advancement of the battery cell 1 0 and cleans off foulants on the de-electrified battery cell 10.

The transfer roller 104 has an adhesive having a higher adhesive force than the cleaning roller 102 supported on its surface and is a strongly adhesive roller that can rotate while in contact with the cleaning roller 102. The transfer roller 104, as shown in FIG. 6 and FIG. 7, is disposed in parallel with the cleaning roller 102. The transfer roller 104 is brought into contact with the cleaning roller 102 at the time when the battery cell 10 is cleaned by the cleaning roller 102 and is separated from the cleaning roller 102 when cleaned is not occurring. Details concerning the operation whereby the cleaning roller 102 and the transfer roller 104 are brought together and separated are described below.

The roller support part 106 supports the cleaning roller 102 and the transfer roller 104 so that they can freely rotate. The rotational shaft of the cleaning roller 102 is held in a deep hole 106h that has been provided in the roller support part 106. The deep hole 106h is formed deep in the battery cell 10. As a result, the cleaning roller 102 can move in a direction whereby it moves towards the battery cell 10 and a direction whereby it separates from the battery cell 10. The transfer roller 104 is attached at a prescribed location on the roller support part 106 and is supported on the roller support part 106 at the same location so that it can freely rotate.

A pin 106a that protrudes away from the battery cell 10 is provided on the roller support part 106. The pin 106a has a spring retention part 106b that supports one end of the spring 110.

The cylinder 108 has a shaft that advances towards, or retracts away from, the battery cell 10, with this shaft being fixed to a support plate 108a. The pin 106a of the roller support part 106 passes through the support plate 108a. A spring retention part 108b that supports one end of the spring 110 is formed in the support plate 108a. The pin 106a of the roller support part 106 passes through the spring retention part 108b.

The spring 110 is attached between the spring retention part 106b and the spring retention part 108b described above. The spring 110 transmits the power from advancement or retraction of the shaft of the cylinder 108 to the roller support part 106. For example, when the shaft of the cylinder 108 is advanced towards the battery cell 10, the support plate 108a moves in the same manner. Along with this movement, the spring retention part 108b presses the spring 110 onto the battery cell 10. Upon being pressed, the spring 110 presses the spring retention part 106b, i.e., the pin 106a presses the battery cell 10. As a result of movement of the pin 106a, the roller support part 106 also moves towards the battery cell 10. In this manner, movement of the cylinder 108 is transferred to the roller support part 106. When the shaft of the cylinder 108 is to be retracted as well, the roller support part 106 also is retracted via the spring 110 by the same principle.

The motor 112 is attached to the support plate 108a. The motor 112 has a shaft that rotates. A belt 114 is attached to the shaft of the motor 112.

The belt 114 is attached to the rotating shaft of the motor 112 and the rotating shaft of the transfer roller 104. Consequently, rotation of the motor 112 is transferred to the transfer roller 104 via the belt 114.

The fixing part 116 is attached to a fixing position that is separate from the roller support part 106 and the like. The fixing part 116 impinges upon the rotating shaft of the cleaning roller 102 when the cylinder 108 has been retracted, thereby inhibiting movement of the cleaning roller 102.

### (Operation)

The operation of the battery cleaning device 100 and the operation of the pressing roller 60 and the static electricity elimination device 62 are described below with reference to FIG. 6 and FIG. 7.

For example, the battery cell 10 is transported from the right to the left of the page in FIG. 6. The position of the battery cell 10 is known by a sensor not shown in the drawings. When the leading end in the direction of advancement of the flat surface 14 of the battery cell 10 arrives at the position of the static electricity elimination device 62, the static electricity elimination device 62 operates. The static electricity elimination device 62 then blows ions onto the flat surfaces 14 on both sides of the battery cell 10, thereby de-electrifying the battery cell 10. De-electrification with the static electricity elimination device 62 is carried out until the trailing edge of the flat surface 14 has passed.

The battery cleaning device 100, as shown in FIG. 6(B) and FIG. 7(B) is on stand-by at a separated location from the flat surface 14 of the battery cell 10 until the leading edge in the direction of advancement of the flat surface 14 of the battery cell 1 0 arrives. During stand-by, the cleaning rollers 102 and the transfer rollers 104 of the battery cleaning device 100 are separated from each other.

When the leading edge of the flat surface 14 of the battery cell 10 that has been de-electrified by the static electricity elimination device 62 arrives, as shown in FIG. 6(A) and FIG. 7(A), the battery cleaning device 100 approaches the battery cell 10. In detail, the shafts of the cylinders 108 advance towards the battery cell 10, and the roller support parts 106 also advance towards the battery cell 10. First, the cleaning rollers 102 come into contact with the surfaces of the battery cell 10. In addition, although the roller support parts 106 advance, the positions of the cleaning rollers 102 relative to the battery cell 10 are roughly unchanged, whereas the position changes relative to the roller support parts 106 along the deep holes 106h. The transfer rollers 104 contact the cleaning rollers 102 along with movement of the roller support parts 106. When advancement of the shafts of the cylinders 108 stops, movement of the roller support parts 106 also stops. At this point, the roller support parts 106 are connected to the support plates 108a of the cylinders 108 via the springs 110 and are thus in a so-called floating state. As a result, the battery cell 10, the cleaning rollers 102, and the transfer rollers 104 are made to be in contact with equivalent forces.

When the battery cell 10 is conveyed towards the left of the page in FIG. 6, the foulants on the battery cell 10 are adhered by the adhesive at the surface of the cleaning roller 102 as it rotates in the direction indicated by the middle arrow in FIG. 6 over the flat surfaces 14 of the battery cell 10. The transfer rollers 104 rotate in the direction whereby they move along with rotation of the cleaning rollers 102. The transfer rollers 104 have a surface with a higher degree of adhesion than the cleaning rollers 102, and so the foulants on the cleaning rollers 102 are recovered. The motors 112 cause the cleaning rollers 104 to rotate synchronously with the speed at which the battery cell is transported 10.

When cleaning has been completed up to the trailing edge in the direction of advancement of the battery cell 10, the battery cleaning device 100 separates from the battery cell 10. In detail, the shafts of the cylinders 108 retract in the direction whereby they separate from the battery cell 10, and the roller support parts 106 also moves in a direction whereby they separate from the battery cell 1 0. Along with movement of the roller support parts 106, the cleaning rollers 102 separate from the battery cell 10. In addition, when the roller support parts 106 retract, the rotating shafts of the cleaning rollers 102 also impinge on the fixing parts 116. Because the rotating shafts of the cleaning rollers 102 are supported in the deep holes 106h, even through the roller support parts 106 retract, the cleaning rollers 102 are positioned by the fixing parts 116. Along with retraction of the position relative to the roller support parts 106, the transfer rollers 104 also move, and so the transfer rollers 104 separate from the cleaning rollers 102. When retraction of the shafts of the cylinders 108 stops, movement of the roller support parts 106 also stops. At this point, the cleaning rollers 102 and the transfer rollers 104 are separated from each other and are supported on the roller support parts 106.

When the leading edge of the flat surface 14 of the battery cell 10 that has been cleaned by the cleaning rollers 102 reaches the position of the pressing rollers 60, as shown in FIG. 6, the pressing rollers 60 abut the two flat surfaces 14 of the battery cell 10 and roller-pressing occurs over the flat surfaces 14. As a result, the battery element 15 in the battery cell 10 is pressed along the direction of lamination, the gas or air inside the battery element 15 is pressed out, and the electrolyte impregnates into the battery element 15. Pressing of the battery cell 10 by the pressing rollers 60 continues until the trailing edge of the flat surfaces 14 of the battery cell 10 has passed.

The following effects result from the battery cleaning device 100 of the first embodiment as described above.

The battery cleaning device 100 cleans the flat surfaces 14 of the battery cell 1 0 with the cleaning rollers 102 prior to roller-pressing with the press roller 60. Consequently, foulants that have adhered to the flat surfaces 14 will not be pressed against the battery cell 10, and damage to the battery cell 10 will not occur. In addition, because the battery cell 10 can be cleaned during the same pressing step as roller pressing, providing a separate step for cleaning is not necessary.

The cleaning rollers 102 are adhesive rollers with adhesive attached to the surfaces and thus can adhere and remove foulants on the flat surfaces 14.

The transfer rollers 104 are provided in the battery cleaning device 100 as strongly adhesive rollers with higher adhesion than the cleaning rollers 102. Because the transfer rollers 104 are in contact with the cleaning rollers 102, the rollers can adhere the foulants recovered from the flat surfaces of the battery cell 10 by the cleaning rollers 102. By recovering the foulants on the cleaning rollers 102, the foulants will not return when the same portion of the cleaning rollers 102 contacts the flat surfaces 14 of the battery cleaning device 100 again, and the flat surfaced 14 will not be damaged.

The cleaning rollers 102 operate by contacting the two flat surfaces 14 of the battery cell 10 and thus can carry out efficient cleaning.

The transfer rollers 104 are driven to rotate synchronously with the speed at which the battery cell is transported 10 by the rotational power from the motors 112. Consequently, the transfer rollers 104 can rotate irrespective of the adhesion between the cleaning rollers 102 and the transfer rollers 104, and the adhesion between the battery cell 10 and the cleaning rollers 102. As a result, the cleaning rollers 102 also rotate smoothly, and no issues arise such as delay of transport of the battery cell 10 due to adhesion.

When the cleaning rollers 102 clean the battery cell 10, the transfer rollers 104 contact the cleaning rollers 102 and recover the foulants. On the other hand, when the cleaning rollers 102 are in a standby state and are not cleaning the battery cell 10, the transfer rollers 104 do not contact the cleaning rollers 102. Consequently, it is possible to prevent an unnecessary decrease in adhesiveness due to adhesion between the cleaning rollers 102 and the transfer rollers 104 during standby.

### (Second Embodiment)

In the first embodiment, both flat surfaces 14 of the battery cell 10 were cleaned simultaneously. In the second embodiment, however, a configuration is described in which one flat surface is cleaned at a time. Although the difference is that one side at a time is cleaned, the device configuration is roughly the same from the standpoint of one cleaning roller 102 of the pair of cleaning rollers 102 used in the battery cleaning device 100 in the first embodiment. Consequently, the same reference numbers are used for the same configurations as in the first embodiment, and duplicate descriptions are not made.

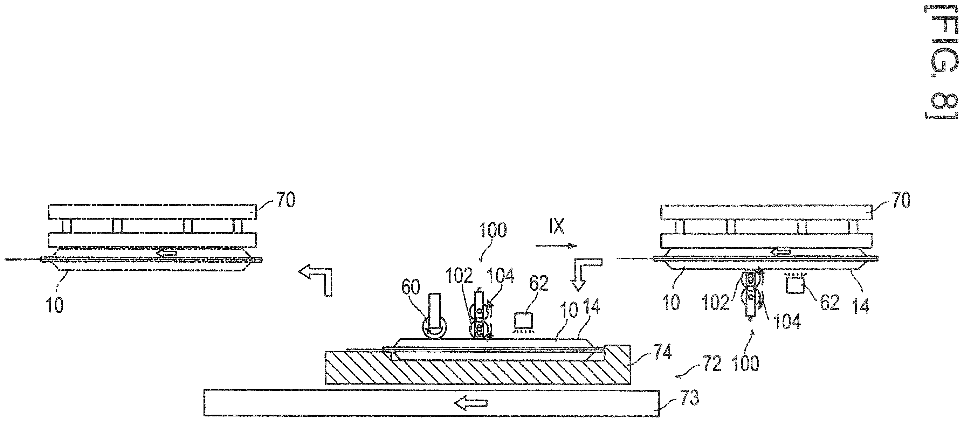

FIG. 8 is a schematic diagram showing the movement of the battery cell in the pressing step.

As shown in FIG. 8, in the pressing step of the second embodiment, two transport devices 70, 72 are provided that transport the battery cell 1 0 in a so-called flat state with the flat surface 14 upwards or downwards. One of the transport devices 70 transports the battery cell 10 through the air while holding it from above. The transport device 70, for example, is a transport robot that transports the cell by adsorbing to the flat surface 14 of the battery cell 10. Alternatively, the transport device 70 may be a transport robot that transports the cell by grasping the outer periphery portion (top edge) of the external packaging 13 of the battery cell 10.

In addition, the transport device 72 smoothly transports a transport tray 74 on a slide device 73. The transport tray 74 is formed with a depression that matches the size of the battery cell 10, and transports the battery cell 10 while positioning it in the depression.

In the step in which transport through the air is carried out by the transport device 70, the static electricity elimination device 62 and the battery cleaning device 100 are disposed near the bottom surface of the battery cell 1 0. The position of the battery cell 1 0 is checked by a sensor not shown in the drawings, and, after de-electrification of the flat surface 14 on the bottom of the battery cell 10 by the static electricity elimination device 62, cleaning is carried out by the cleaning roller 102. Although performed from only one side, de-electrification and cleaning of the flat surface 14 of the battery cell 10 are the same as in the first embodiment.

Thus, the battery cell 10 is transferred from the transport device 70 to the transport device 72. At this time, the battery cell 10 is carried on the transport tray 74 with the cleaned bottom surface facing the transport tray 74.

In the pressing step in which the battery cell 10 is transported while being carried on the transport tray 74, the static electricity elimination device 62, the cleaning roller 102, and the press roller 60 are arranged near the top surface of the battery cell 10 that has not been cleaned. The position of the battery cell 10 is confirmed by a sensor, and the flat surface 14 on top of the battery cell 10 is de-electrified by the static electricity elimination device 62, whereupon it is cleaned by the cleaning roller 102. In addition, the battery cell 10 is roller-pressed by the press roller 60. The press roller 60 presses the battery cell 10 onto the transport tray 74, and thus the battery element 15 inside the battery cell 10 is pressed. Although performed from only one side, de-electrification, cleaning, and roller pressing on the flat surface 14 of the battery cell 10 are the same as in the first embodiment.

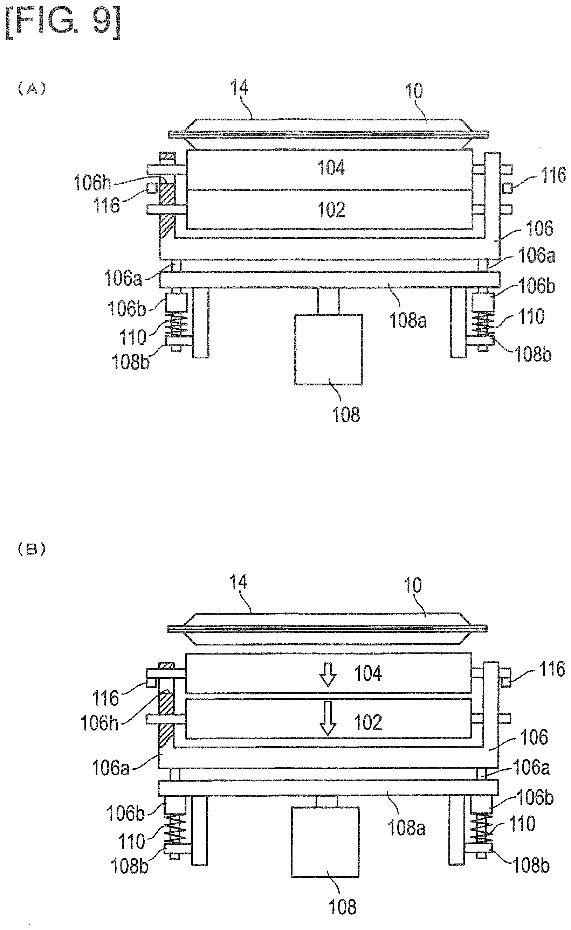

FIG. 9 is a schematic view of the battery cleaning device as seen from the direction of IX in FIG. 8. With the battery cleaning device 100, as in the first embodiment, by advancing or retracting the cylinder 108, the cleaning roller 102 and the transfer roller 104 are made to approach or separate from the battery cell 10. When the cleaning roller 102 is in contact with the flat surface 14 of the battery cell 10, the transfer roller 104 also contacts the cleaning roller 102. When the cleaning roller 102 separates from the flat surface 14 of the battery cell 10, and the battery cleaning device 100 returns to a standby position, the battery cell 104 separates from the cleaning roller 102. In this manner, one of the flat surfaces 14 of the battery cell 10 can be cleaned. When the flat surface 14 of the battery cell 10 that has been placed on the transport tray 74 is to be cleaned, the battery cleaning device 100 is disposed at a position that is inverted vertically in FIG. 9. The configuration is the same.

Even when the battery cell 10 is placed flat and transported as in the second embodiment described above, the flat surface 14 of the battery cell 10 can be cleaned one surface at a time. The flat surface 14 that is concealed by virtue of facing the transport tray 74 is cleaned prior to placement on the transport tray 74, and so both surfaces of the battery cell 10 can be cleaned. When the battery cell 10 is pressed by the pressing roller 60, there are no foulants on the surface of the battery cell 10, and so the battery cell 10 is not damaged by foulants pressed onto the battery cell 10.

In the first embodiment, the transfer roller 104 was driven by the motor 112, but the motor 112 is omitted in the second embodiment. Because the battery cell 10, the cleaning roller 102, and the transfer roller 104 are in contact with each other under equivalent pressure, the cleaning roller 102 rotates along with transport of the battery cell 10, and the transfer roller 104 rotates along therewith. In particular, because the battery cell 10 is held tightly and transported by the transport device 70 or transport tray 74 in the second embodiment, there is no delay of battery cell 10 transport, even if the transfer roller 104 is not driven. Of course, a motor 112 may be provided, and the transfer roller 104 may rotate in accordance with the speed at which the battery cell is transported 10 as in the first embodiment.

### (Third Embodiment)

In the first embodiment and second embodiment, configurations were described in which the cleaning roller 102 was used in order to clean the surfaces of the battery cell 10. However, the cleaning means is not restricted to this configuration.

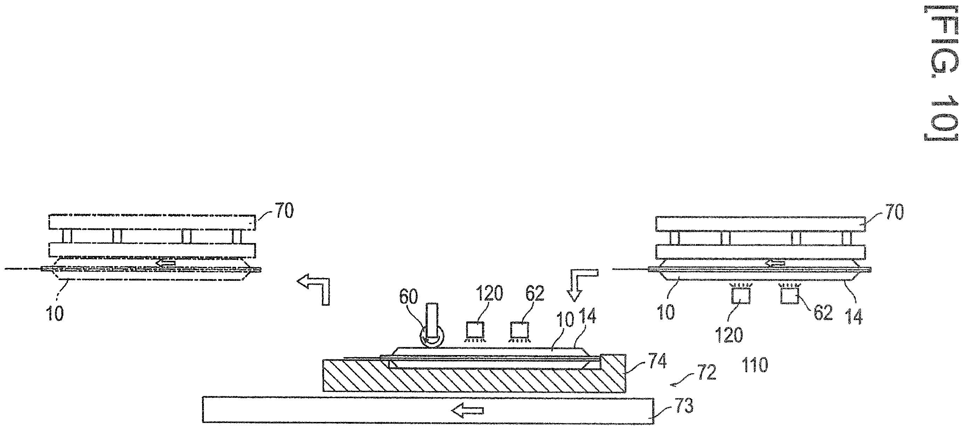

FIG. 10 is a diagram that shows the configuration whereby the surface of the battery cell 10 is cleaned by the air blower.

As shown in FIG. 10, in the third embodiment, a battery cleaning device 120 is provided instead of the battery cleaning device 100 that comprises the cleaning roller 102. The battery cleaning device 120 blows air towards the flat surface 14 of the battery cell 10, thereby blowing off foulants from the battery cell 10 and cleaning the battery cell 10. The remaining configuration is the same as in the first and second embodiments.

Because the foulants on the battery cell 10 are removed by blowing air, the flat surface can be cleaned without contacting the battery cell 10.

### (Fourth Embodiment)

In the first embodiment and the second embodiment, examples were described in which the foulants adhered by the cleaning roller 102 are recovered by the transfer roller 104. However, embodiments are not restricted to these. The battery cell 10 can be cleaned with only the cleaning roller 102, without providing the transfer roller 104.

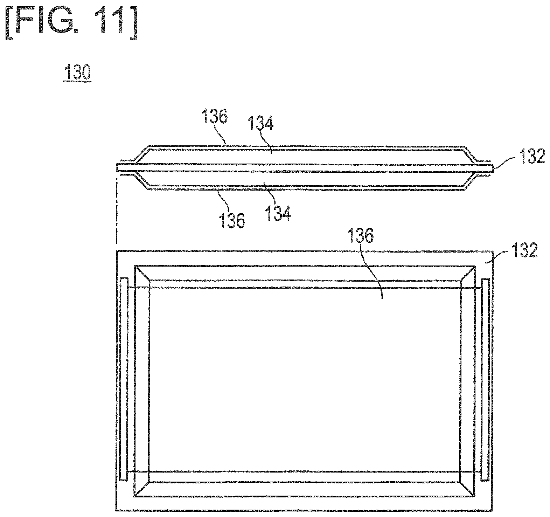

FIG. 11 is a schematic diagram showing a cell to be cleaned.

When there is no transfer roller 104, it is periodically necessary to clean the cleaning roller 102. When cleaning the cleaning roller 102 is to perform cleaning, a cleaning cell 130 shown in FIG. 11 is used. The cleaning cell 130, for example, has rubber 134 that is attached to a sheet material 132 and is formed in the same shape as the battery cell 10. An adhesive sheet 136 is attached to the rubber 134. The adhesive sheet 136 has higher adhesion than the surface of the cleaning roller 102.

Instead of transporting the battery cell 10 in FIG. 4 or FIG. 8, the cleaning cell 130 is transported, and the cleaning roller 102 of the battery cleaning device 100 is made to contact the cleaning cell 130. As a result, the foulants attached to the surface of the cleaning roller 102 can be recovered on the cleaning cell 130, and the cleaning roller 102 can be cleaned.

In this manner, the cleaning roller 102 can be cleaned without providing a transfer roller 104.

This application is based on Patent Application 2012-28487 published by the Japanese Patent Office on February 13, 2012.

### Key to Symbols

- 10: Battery cell
- 13: External packaging
- 14: Flat surface
- 15: Battery element
- 50, 52, 70, 72: Transport device
- 53: Belt
- 56: Guide roller
- 60: Pressing roller
- 62: Static electricity elimination device
- 73: Slide device
- 74: Transport tray
- 100, 120: Battery cleaning device
- 102: Cleaning roller
- 104: Transfer roller
- 106: Roller support part
- 106a: Pin
- 106b: Spring retention part
- 106h: Deep hole
- 108: Cylinder
- 108a: Support plate
- 108b: Spring retention part
- 110: Spring
- 112: Motor
- 114: Belt
- 116: Fixing part
- 130: Cleaning cell
- 132: Plate material
- 134: Rubber
- 136: Adhesive sheet

## Claims

1. A battery cleaning device (100, 120) having pressing rollers (60) for roller-pressing and a cleaning means for cleaning a flat surface (14) of a battery cell (10), the battery cell (10) having at least one flat surface (14), and the battery cleaning device (100, 120) is adapted to clean the flat surface (14) prior to the roller-pressing,
**characterized in that** the cleaning means is a first adhesive roller (102) that has an adhesive held on a surface thereof, the cleaning means contacting the flat surface (14) of the battery cell (10) while rotating and cleaning the flat surface (14), and
**characterized by** a second adhesive roller (104) having an adhesive on a surface thereof, and having an adhesive force that is higher than that of the first adhesive roller (102), the second adhesive roller (104) rotating while in contact with the first adhesive roller (102).

2. The battery cleaning device (100, 120) according to claim 1, wherein the cleaning means cleans the flat surface (14) in the same step as the roller-pressing.

3. The battery cleaning device (100, 120) according to claim 1, wherein the battery cell (10) is transported, and the second adhesive roller (104) is driven to rotate synchronously with the speed at which the battery cell (10) is transported.

4. The battery cleaning device (100, 120) according to any of claims 1 to 3, wherein the flat surfaces (14) are provided to both surfaces constituting the front and rear of the battery cell (10), a pair of cleaning means are provided facing both surfaces of the battery cell (10), and the two surfaces are cleaned simultaneously.

5. The battery cleaning device (100, 120) according to any of claims 1 to 3, wherein the flat surfaces (14) are provided to both surfaces constituting the front and rear of the battery cell (10), and the cleaning means cleans one surface of the battery cell (10) first, and then cleans the other surface of the battery cell (10) after the battery cell is placed on the transport means for transporting the battery cell (10) so that the one surface is facing the transport means.

6. The battery cleaning device (100, 120) according to claim 1, wherein the battery cell (10) contains a battery element (15) for generating electricity and an electrolyte, and wherein the roller pressing presses gas or air inside the battery element (15) out such that the electrolyte impregnates into the battery element (15) in its place.

7. A battery cleaning method wherein a flat surface (14) of a battery cell (10) to be roller-pressed is automatically cleaned by cleaning means prior to the roller-pressing, the battery cell (10) having at least one flat surface (14),
**characterized in that** the cleaning means is a first adhesive roller (102) that has an adhesive held on a surface thereof, the cleaning means contacting the flat surface (14) of the battery cell (10) while rotating and cleaning the flat surface (14), and
**characterized by** a second adhesive roller (104) having an adhesive on a surface thereof, and having an adhesive force that is higher than that of the first adhesive roller (102), the second adhesive roller (104) rotating while in contact with the adhesive roller (102).

8. The battery cleaning method according to claim 7, wherein the cleaning means cleans the flat surface in the same step as the roller-pressing.

9. The battery cleaning method according to claim 7, wherein the battery cell (10) comprises a battery element (15) for generating electricity and an electrolyte, and
wherein the roller pressing presses gas or air inside the battery element (15) out such that the electrolyte impregnates into the battery element (15) in its place.

## Patentansprüche

1. Batteriereinigungsvorrichtung (100, 120) mit Presswalzen (60) zum Walzenpressen und einer Reinigungseinrichtung zum Reinigen einer ebenen Fläche (14) einer Batteriezelle (10), wobei die Batteriezelle (10) zumindest eine ebene Fläche (14) aufweist, und die Batteriereinigungsvorrichtung (100, 120) angepasst ist, um die ebene Fläche (14) vor dem Walzenpressen zu reinigen,
- **dadurch gekennzeichnet, dass** die Reinigungseinrichtung eine erste Klebstoffwalze (102) ist, die einen Klebstoff aufweist, der auf einer zugehörigen Fläche gehalten wird, wobei die Reinigungseinrichtung die ebene Fläche (14) der Batteriezelle (10) kontaktiert, während die ebene Fläche (14) gedreht und gereinigt wird, und
- **gekennzeichnet durch** eine zweite Klebstoffwalze (104) mit einem Klebstoff auf einer zugehörigen Fläche, und mit einer Haftkraft, die größer als die der ersten Klebstoffwalze (102) ist, wobei sich die zweite Klebstoffwalze (104) beim Kontakt mit der ersten Klebstoffwalze (102) dreht.

2. Batteriereinigungsvorrichtung (100, 120) nach Anspruch 1, wobei die Reinigungseinrichtung die ebene Fläche (14) in demselben Schritt wie das Walzenpressen reinigt.

3. Batteriereinigungsvorrichtung (100, 120) nach Anspruch 1, wobei die Batteriezelle (10) transportiert wird, und die zweite Klebstoffwalze (104) angetrieben wird, um sich synchron mit der Drehzahl, mit der die Batteriezelle (10) transportiert wird, zu drehen.

4. Batteriereinigungsvorrichtung (100, 120) nach einem der Ansprüche 1 bis 3, wobei die ebenen Flächen (14) an beiden Flächen vorgesehen sind, die die Vorderseite und Rückseite der Batteriezelle (10) bilden, ein Paar von Reinigungseinrichtungen vorgesehen sind, die beiden Flächen der Batteriezelle (10) zugewandt sind, und die beiden Flächen gleichzeitig gereinigt werden.

5. Batteriereinigungsvorrichtung (100, 120) nach einem der Ansprüche 1 bis 3, wobei die ebenen Flächen (14) an beiden Flächen vorgesehen sind, die die Vorderseite und Rückseite der Batteriezelle (10) bilden, und die Reinigungseinrichtung eine Fläche der Batteriezelle (10) zuerst reinigt, und dann die andere Fläche der Batteriezelle (10) reinigt, nachdem die Batteriezelle auf der Transporteinrichtung zum Transportieren der Batteriezelle (10) angeordnet ist, so dass die eine Fläche der Batteriezelle zugewandt ist.

6. Batteriereinigungsvorrichtung (100, 120) nach Anspruch 1, wobei die Batteriezelle (10) ein Batterieelement (15) zum Erzeugen von Elektrizität und einen Elektrolyten enthält, und wobei die Walzenpressung Gas oder Luft innerhalb des Batterieelements (15) derart herausdrückt, dass der Elektrolyt stattdessen in das Batterieelement (15) imprägniert wird.

7. Batteriereinigungsverfahren, wobei eine ebene Fläche (14) einer Batteriezelle (10), die durch eine Walze angepresst werden soll, automatisch durch eine Reinigungseinrichtung vor dem Walzenpressen gereinigt wird, wobei die Batteriezelle (10) zumindest eine ebene Fläche aufweist (14),
- **dadurch gekennzeichnet, dass** die Reinigungseinrichtung eine erste Klebstoffwalze (102) ist, die einen Klebstoff aufweist, der auf einer zugehörigen Fläche gehalten wird, wobei die Reinigungseinrichtung die ebene Fläche (14) der Batteriezelle (10) kontaktiert, während die ebene Fläche (14) gedreht und gereinigt wird, und
- **gekennzeichnet durch** eine zweite Klebstoffwalze (104) mit einem Klebstoff auf einer zugehörigen Fläche, und mit einer Haftkraft, die größer als die der ersten Klebstoffwalze (102) ist, wobei sich die zweite Klebstoffwalze (104) beim Kontakt mit der Klebstoffwalze (102) dreht.

8. Batteriereinigungsverfahren nach Anspruch 7, wobei die Reinigungseinrichtung die ebene Fläche in demselben Schritt wie das Walzenpressen reinigt.

9. Batteriereinigungsverfahren nach Anspruch 7, wobei die Batteriezelle (10) ein Batterieelement (15) zum Erzeugen von Elektrizität und einen Elektrolyten aufweist, und
- wobei die Walzenpressung Gas oder Luft innerhalb des Batterieelements (15) derart herausdrückt, dass der Elektrolyt stattdessen in das Batterieelement (15) imprägniert wird.

## Revendications

1. Dispositif de nettoyage de batterie (100, 120) ayant des rouleaux de pression (60) pour réaliser une pression à rouleaux et un moyen de nettoyage pour nettoyer une surface plate (14) d'une cellule de batterie (10), la cellule de batterie (10) ayant au moins une surface plate (14), et le dispositif de nettoyage de batterie (100, 120) est adapté pour nettoyer la surface plate (14) avant la pression à rouleaux,
**caractérisé en ce que** le moyen de nettoyage est un premier rouleau d'adhésif (102) qui a un adhésif maintenu sur une surface de celui-ci, le moyen de nettoyage venant en contact avec la surface plate (14) de la cellule de batterie (10) tout en tournant et nettoyant la surface plate (14), et
**caractérisé par** un deuxième rouleau d'adhésif (104) ayant un adhésif sur une surface de celui-ci, et ayant une force d'adhérence qui est supérieure à celle du premier rouleau d'adhésif (102), le deuxième rouleau d'adhésif (104) tournant tout en étant en contact avec le premier rouleau d'adhésif (102).

2. Dispositif de nettoyage de batterie (100, 120) selon la revendication 1, dans lequel le moyen de nettoyage nettoie la surface plate (14) à la même étape que la pression à rouleaux.

3. Dispositif de nettoyage de batterie (100, 120) selon la revendication 1, dans lequel la cellule de batterie (10) est transportée, et le deuxième rouleau d'adhésif (104) est entraîné en rotation de manière synchrone à la vitesse à laquelle la cellule de batterie (10) est transportée.

4. Dispositif de nettoyage de batterie (100, 120) selon l'une des revendications 1 à 3, dans lequel les surfaces plates (14) sont prévues sur les deux surfaces constituant les parties avant et arrière de la cellule de batterie (10), une paire de moyens de nettoyage sont prévus en face des deux surfaces de la cellule de batterie (10), et les deux surfaces sont nettoyées simultanément.

5. Dispositif de nettoyage de batterie (100, 120) selon l'une des revendications 1 à 3, dans lequel les surfaces plates (14) sont prévues sur les deux surfaces constituant les parties avant et arrière de la cellule de batterie (10), et le moyen de nettoyage nettoie une première surface de la cellule de batterie (10) d'abord, et ensuite nettoie l'autre surface de la cellule de batterie (10) après que la cellule de batterie est placée sur le moyen de transport pour transporter la cellule de batterie (10) de sorte que la première surface fasse face au moyen de transport.

6. Dispositif de nettoyage de batterie (100, 120) selon la revendication 1, dans lequel la cellule de batterie (10) contient un élément de batterie (15) pour générer de l'électricité et un électrolyte, et où la pression à rouleaux permet de presser le gaz ou l'air à l'intérieur de l'élément de batterie (15) vers l'extérieur de sorte que l'électrolyte s'imprègne dans l'élément de batterie (15) à sa place.

7. Procédé de nettoyage de batterie dans lequel une surface plate (14) d'une cellule de batterie (10) devant subir une pression à rouleaux est automatiquement nettoyée par un moyen de nettoyage avant la pression à rouleaux, la cellule de batterie (10) ayant au moins une surface plate (14),
**caractérisé en ce que** le moyen de nettoyage est un premier rouleau d'adhésif (102) qui a un adhésif maintenu sur une surface de celui-ci, le moyen de nettoyage venant en contact avec la surface plate (14) de la cellule de batterie (10) tout en tournant et nettoyant la surface plate (14), et
**caractérisé par** un deuxième rouleau d'adhésif (104) ayant un adhésif sur une surface de celui-ci, et ayant une force d'adhérence qui est supérieure à celle du premier rouleau d'adhésif (102), le deuxième rouleau d'adhésif (104) tournant tout en étant en contact avec le rouleau d'adhésif (102).

8. Procédé de nettoyage de batterie selon la revendication 7, dans lequel le moyen de nettoyage nettoie la surface plate à la même étape que la pression à rouleaux.

9. Procédé de nettoyage de batterie selon la revendication 7, dans lequel la cellule de batterie (10) comprend un élément de batterie (15) pour générer de l'électricité et un électrolyte, et
dans lequel la pression à rouleaux permet de presser le gaz ou l'air à l'intérieur de l'élément de batterie (15) vers l'extérieur de sorte que l'électrolyte s'imprègne dans l'élément de batterie (15) à sa place.
